(19) Europäisches Patentamt
European Patent Office
Office européen des brevets

(11) **EP 4 668 235 A1**

(12) **EUROPEAN PATENT APPLICATION**

(43) Date of publication:
**24.12.2025 Bulletin 2025/52**

(21) Application number: **25177223.2**

(22) Date of filing: **19.05.2025**

(51) International Patent Classification (IPC):
**G06V 20/52** (2022.01)

(52) Cooperative Patent Classification (CPC):
**G06V 20/52; G06V 40/103**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.06.2024 JP 2024100774**

(71) Applicant: **FUJITSU LIMITED**
**Kawasaki-shi, Kanagawa 211-8588 (JP)**

(72) Inventors:
• **WAKAMA, Toshiaki**
**Kawasaki-shi, Kanagawa, 211-8588 (JP)**
• **NAKAYAMA, Osafumi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ANALYSIS PROGRAM, ANALYSIS METHOD, AND INFORMATION PROCESSING APPARATUS**

(57) An analysis program causess a computer to execute a process including specifying (S103) a plurality of portions of a person included in an image configuring a video obtained by capturing in a facility by analyzing the video, converting (S203, S204) each coordinate position on the image of the plurality of specified portions of the person into each coordinate position on a map in the facility, extracting (S104) any target portion among the plurality of portions based on each positional relationship of the converted coordinate positions on the map, and setting (S106, S107) the coordinate position of the extracted target portion on the map as a position where the person exists.

FIG.10

EP 4 668 235 A1

**Description**

FIELD

The embodiments discussed herein are related to an analysis program and the like.

BACKGROUND

In the retail industry and the like, a flow line indicating the number, attributes, and moving routes of people who entered a store is specified based on a video of each customer from entering the store to leaving the store, and measures are taken to increase sales of the store using the specified information.

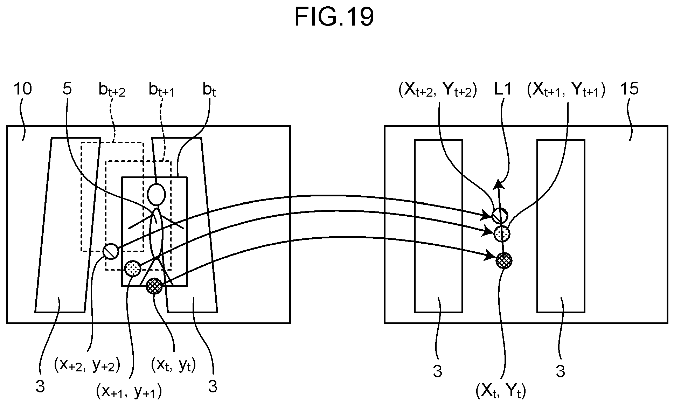

Here, floor mapping is used to specify a flow line of a person. FIG. 19 is a diagram for describing floor mapping in the related art. A camera image 10 is an image (video) captured while a person 5 is walking between shelves. For example, a region (bounding box) of the person 5 at a time t is set as a region bt. The region of the person 5 at a time t+1 is set as a region $b_{t+1}$. The region of the person 5 at a time t+2 is set as a region bt+2 .

In the related art, a portion where the center of a lower end of the region is grounded to a floor plane is assumed to be the feet of the person 5. Coordinates of the feet of the person 5 of the camera image 10 obtained from the region $b_t$ are $(x_t, y_t)$. Coordinates of the feet of the person 5 of the camera image 10 obtained from the region $b_{t+1}$ are $(x_{t+1}, y_{t+1})$. Coordinates of the feet of the person 5 of the camera image 10 obtained from the region $b_{t+2}$ are $(x_{t+2}, y_{t+2})$ .

In the related art, coordinates (x, y) of the feet of the person assumed in the camera image 10 are converted into the coordinates (X, Y) of a map 15 using a homography matrix H. For example, the coordinates $(x_t, y_t)$ of the feet of the person 5 of the camera image 10 are converted into coordinates $(X_t, Y_t)$ of the map 15. The coordinates $(x_{t+1}, y_{t+1})$ of the feet of the person 5 of the camera image 10 are converted into coordinates $(X_{t+1}, Y_{t+1})$ on the map 15. The coordinates $(x_{t+2}, y_{t+2})$ of the feet of the person 5 of the camera image 10 are converted into coordinates $(X_{t+2}, Y_{t+2})$ on the map 15.

A line L1 passing through the coordinates $(X_t, Y_t)$, the coordinates $(X_{t+1}, Y_{t+1})$, and the coordinates $(X_{t+2}, Y_{t+2})$ of the map 15 is specified as the flow line (movement trace) of the person 5.

[Patent Literature 1] Japanese Laid-open Patent Publication No. 2021-33395
[Patent Literature 2] Japanese Laid-open Patent Publication No. 2016-177757
[Patent Literature 3] International Publication Pamphlet No. WO 2020/188746

However, in the above-described related art, there is a problem that accuracy of a position of a person on a map decreases when the feet of the person are hidden.

For example, when the feet of the person are hidden, an error occurs in coordinates of the feet of the person of the camera image. Accordingly, coordinates of the map obtained by directly applying the homography matrix H to the coordinates of the feet in the wrong camera image are different from actual coordinates of the person.

Accordingly, it is an object in one aspect of an embodiment of the present invention to provide an analysis program, an analysis method, and an information processing apparatus capable of improving accuracy of a position of a person on a map.

SUMMARY

An analysis program causes a computer to execute a process. The process includes specifying (S103) a plurality of portions of a person included in an image configuring a video obtained by capturing in a facility by analyzing the video, converting (S203, S204) each coordinate position on the image of the plurality of specified portions of the person into each coordinate position on a map in the facility, extracting (S104) any target portion among the plurality of portions based on each positional relationship of the converted coordinate positions on the map, and setting (S106, S107) the coordinate position of the extracted target portion on the map as a position where the person exists.

BRIEF DESCRIPTION OF DRAWINGS

FIG. 1 is a diagram for describing a homography matrix H;
FIG. 2 is a diagram for describing multilayer homography;
FIG. 3 is a diagram for describing a process of selecting an optimal homography matrix by an information processing apparatus;
FIG. 4 is a diagram (1) for describing a process of determining whether feet of a person are hidden;

FIG. 5 is a diagram (2) for describing a process of determining whether the feet of the person are hidden;

FIG. 6 is a diagram (3) for describing a process of determining whether the feet of a person are hidden;

FIG. 7 is a diagram for describing mapping onto a floor map;

FIG. 8 is a diagram illustrating an example of a movement trace of a person drawn on the floor map;

FIG. 9 is a diagram illustrating an information processing system according to the present embodiment;

FIG. 10 is a functional block diagram illustrating a configuration of an information processing apparatus according to the present embodiment;

FIG. 11 is a diagram illustrating an example of a data structure of a homography matrix table;

FIG. 12 is a diagram illustrating an example of skeleton information;

FIG. 13 is a diagram (1) for describing processing of an estimation unit;

FIG. 14 is a diagram (2) for describing the processing of the estimation unit;

FIG. 15 is a flowchart illustrating a processing procedure of the information processing apparatus according to the present embodiment;

FIG. 16 is a flowchart illustrating a processing procedure of an estimation process;

FIG. 17 is a flowchart illustrating a processing procedure of a feet hiding determination process;

FIG. 18 is a diagram illustrating an example of a hardware configuration of a computer that implements functions similar to those of the information processing apparatus according to the present embodiment; and

FIG. 19 is a diagram for describing floor mapping in the related art.

## DESCRIPTION OF EMBODIMENTS

Preferred embodiments will be explained with reference to accompanying drawings. Note that the present invention is not limited by the examples.

Before describing the present embodiment, a homography matrix H will be described. For example, the homography matrix H is defined by Formula (1).

$$\begin{bmatrix} X \\ Y \\ 1 \end{bmatrix} = H \begin{bmatrix} x \\ y \\ 1 \end{bmatrix} = \begin{bmatrix} h_1 & h_2 & h_3 \\ h_4 & h_5 & h_6 \\ h_7 & h_8 & 1 \end{bmatrix} \begin{bmatrix} x \\ y \\ 1 \end{bmatrix} \qquad \cdots (1)$$

(x, y) in Formula (1) indicates coordinates of a floor surface in a camera image. (X, Y) indicates coordinates on a map. The homography matrix H is a matrix including $h_1$ to $h_8$ and 1.

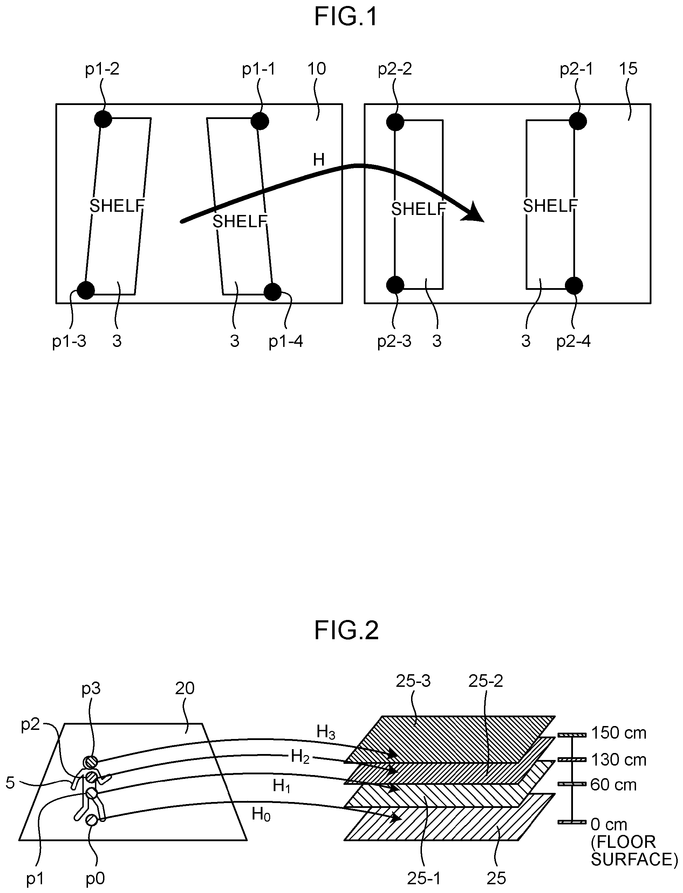

FIG. 1 is a diagram for describing the homography matrix H. For example, from four or more point correspondences to a camera image 10 and a map 15, the homography matrix H is calculated to convert the coordinates (x, y) of the camera image 10 to the coordinates (X, Y) of the map 15.

In the example illustrated in FIG. 1, points p1-1, p1-2, p1-3, and p1-4 of a shelf 3 of the camera image 10 and points p2-1, p2-2, p2-3, and p2-4 of the shelf 3 of the map 15 are associated with each other, and the homography matrix H is calculated from the point correspondences.

For example, in the related art described with reference to FIG. 19, the coordinates of the camera image of the person 5 are converted into the coordinates of the map using one homography matrix H. In the related art, as described above, there is a problem that the accuracy of the position of the person on the map decreases when the feet of the person are hidden.

To solve the problem of the related art, the present embodiment uses a plurality of homography matrices such that the accuracy of the position of the person on the map does not decrease even when the feet of the person are hidden. In the following description, an apparatus that executes processing according to the present embodiment is referred to as an "information processing apparatus 100".

For example, the information processing apparatus 100 uses multilayer homography including a homography matrix $H_0$ and a homography matrix $H_i$. FIG. 2 is a diagram for describing multilayer homography.

The homography matrix $H_0$ is a homography matrix for converting coordinates of points in a camera image 20 into floor surface positions (coordinates) of a map 25. The information processing apparatus 100 uses the homography matrix $H_0$ when converting coordinates of feet p0 of the person 5 into the coordinates of the map 25.

The homography matrix $H_i$ is a homography matrix for converting coordinates of a point of the camera image 20 into coordinates of a plane having a certain height from a floor surface of the map 25. As an example of the homography matrix $H_i$, homography matrices $H_1$, $H_2$, and $H_3$ are illustrated. A height of a plane 25-1 is 60 cm above the floor surface of the map 25. A height of a plane 25-2 is 130 cm above the floor surface of the map 25. A height of the plane 25-3 is 150 cm above the floor surface of the map 25.

The information processing apparatus 100 uses the homography matrix $H_1$ when converting coordinates of a waist p1 of the person 5 into coordinates of the plane 25-1. The information processing apparatus 100 uses the homography matrix $H_2$ when converting coordinates of a shoulder p2 of the person 5 into coordinates of the plane 25-2. The information processing apparatus 100 uses the homography matrix $H_3$ when converting coordinates of a head p3 of the person 5 into coordinates of the plane 25-3. A height from the feet p0 to the waist p1 of the person 5 is 60 cm. A height from the feet p0 to the shoulder p2 of the person 5 is 130 cm. A height from the feet p0 to the head p3 of the person 5 is 150 cm.

By using the multilayer homography illustrated in FIG. 2, when the feet p0 of the person 5 is hidden, it is possible to at least calculate the coordinates (in two dimension) of the map 25 using the coordinates of the waist p1 and the head p3 observable from the camera image 20 and the corresponding homography matrices $H_1$ and $H_3$.

Here, when the height of the waist p1 of the person 5 is 60 cm, the coordinates of the map 25 may be accurately calculated using the homography matrix $H_1$. Meanwhile, when the height of the waist p1 of the person 5 is not 60 cm, the coordinates of the map 25 may be inaccurately calculated using the homography matrix $H_1$. The same applies to the shoulder p2 and the head p3 of the person 5.

Therefore, when the feet p0 of the person 5 is hidden, the information processing apparatus 100 comprehensively calculates the coordinates of the map 25 using the coordinates of the camera image 20 of the waist p1, the shoulder p2, and the head p3 of the person 5 and the homography matrix $H_i$ corresponding thereto.

As described above, in the conversion from the coordinates of the camera image to the coordinates of the floor by the homography matrix H, it is preferable that the height of the portion to be used of the person is known. That is, to accurately convert the coordinates of the camera image of a certain portion of the person into the coordinates of the map, it is preferable that the homography matrix $H_i$ corresponding to the height of the certain portion is used. When conversion is performed using the homography matrix H different from the height of the certain portion, an error occurs in the coordinates of the floor.

Note that the height of the person detected from the camera image and the height of each portion from the floor surface vary depending on the person, and may be unknown in advance. Therefore, it is important how to select an appropriate homography matrix H.

Regarding the above point, the information processing apparatus 100 converts the coordinates of the person of the camera image into the coordinates of the map by executing the following processing. The information processing apparatus 100 specifies a plurality of portions from the person in the camera image, and determines whether the feet of the person are hidden. When the feet of the person are not hidden, the information processing apparatus 100 converts the coordinates of the person into the coordinates of the map using the homography matrix $H_0$.

Meanwhile, when the feet of the person are hidden, the information processing apparatus 100, the information processing apparatus 100 converts the coordinates of the person into the coordinates of the map using an appropriate homography matrix H corresponding to a portion other than the feet (head, waist, or the like) of the person.

First, an example of processing in which the information processing apparatus 100 determines whether the feet of the person are hidden will be described. Note that the information processing apparatus 100 executes a process of selecting the optimum homography matrix H suitable for the height of the portion of the person as a preliminary preparation for determining whether the feet of the person are hidden.

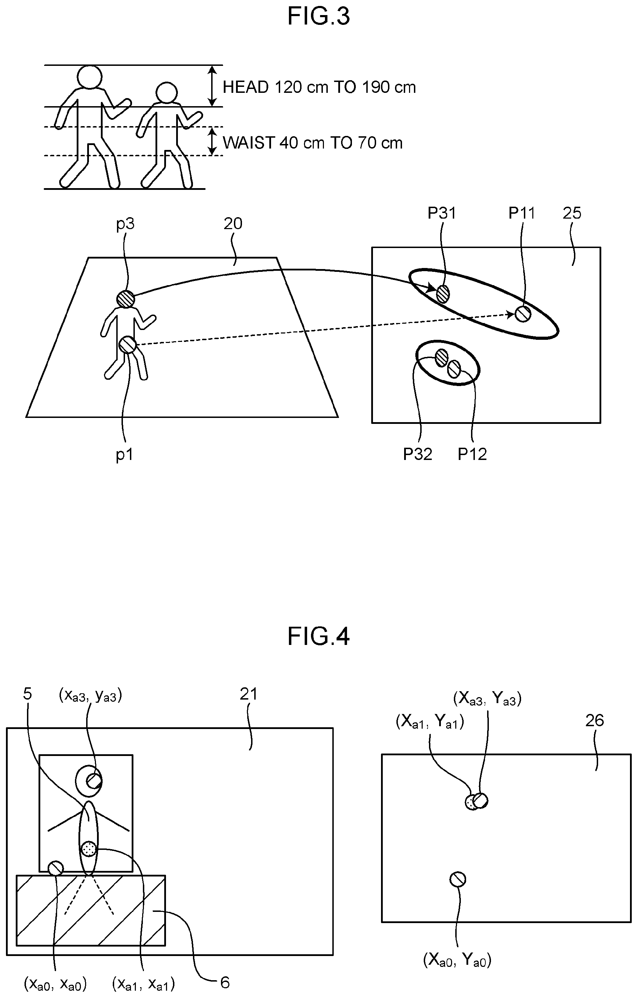

For example, the information processing apparatus 100 prepares a plurality of homography matrices H for each portion of the person, and executes the process described in FIG. 3 to select the optimum homography matrix H for each portion.

FIG. 3 is a diagram for describing a process of selecting an optimal homography matrix. In the description of FIG. 3, for convenience of description, the portions of the person will be described as "waist" and "head". For example, the information processing apparatus 100 prepares the homography matrices H in increments of 5 cm from the height of 40 cm to 70 cm as the homography matrices H for the portion "waist". As a result, the homography matrices H corresponding to the portion "waist" are six types. Note that increments may be set to be different from increments of 5 cm, such as increments of 10 cm or increments of 2 cm.

The information processing apparatus 100 prepares the homography matrices H in increments of 5 cm from the height of 120 cm to 190 cm as the homography matrices H for the portion "head". As a result, the homography matrices H corresponding to the portion "head" are 14 types. Note that increments may be set to be different from increments of 5 cm, such as increments of 10 cm or increments of 2 cm.

Regarding the person detected from the camera image, the information processing apparatus 100 evaluates which combination of heights of the homography matrices H is used to accurately calculate the coordinates of the person on the floor, and performs processing of specifying an optimal combination of the homography matrices H.

The information processing apparatus 100 sets the position (coordinates) of the map 25 obtained as a result of converting the coordinates of the waist p1 of the person 5 using the homography matrix $H_{11}$ as P11. The information processing apparatus 100 sets the position (coordinates) of the map 25 obtained as a result of converting the coordinates of the head p3 of the person 5 using the homography matrix $H_{31}$ as P31.

For example, the homography matrix $H_{11}$ is a homography matrix H corresponding to the height "50 cm" of the waist. The homography matrix $H_{31}$ is a homography matrix H corresponding to the height "120 cm" of the head.

The information processing apparatus 100 sets the position (coordinates) of the map 25 obtained as a result of converting the coordinates of the waist p1 of the person 5 using the homography matrix $H_{12}$ as P12. The information processing apparatus 100 sets the position (coordinates) of the map 25 obtained as a result of converting the coordinates of the head p3 of the person 5 using the homography matrix $H_{32}$ as P32.

For example, the homography matrix $H_{12}$ is a homography matrix H corresponding to the height "60 cm" of the waist. The homography matrix $H_{32}$ is a homography matrix H corresponding to the height "160 cm" of the head.

The information processing apparatus 100 evaluates a combination of the homography matrix $H_{11}$ and the homography matrix $H_{31}$ based on distributions of P11 and P31 of the map 25. The information processing apparatus 100 gives a larger score to the combination of the homography matrix $H_{11}$ and the homography matrix $H_{31}$ when a distance between P11 and P31 is shorter.

The information processing apparatus 100 evaluates a combination of the homography matrix $H_{12}$ and the homography matrix $H_{32}$ based on distributions of P12 and P32 of the map 25. The information processing apparatus 100 gives a larger score to the combination of the homography matrix $H_{12}$ and the homography matrix $H_{32}$ when a distance between P12 and P32 is shorter.

The information processing apparatus 100 repeatedly executes the above processing also for other combinations of the homography matrix H for the portion "waist" and the homography matrix H for the portion "head", and evaluates each combination of the homography matrices H. The information processing apparatus 100 selects a combination of the homography matrices H having the maximum score as the optimum homography matrix H for each portion. Note that the homography matrix H corresponding to the feet among the plurality of portions is fixed to the homography matrix $H_0$.

Note that, when the number of target portions is three or more, the information processing apparatus 100 may specify the score based on the longest distance between two coordinates among the coordinates of the map mapped by the homography matrix H. For example, when mapping the coordinates of the head, the coordinates of the shoulder, and the coordinates of the waist, the information processing apparatus 100 calculates the score based on the distance between the coordinates of the head and the coordinates of the shoulder when the distance between the coordinates of the head and the coordinates of the shoulder is the longest among the combinations of the head and the waist, the head and the shoulder, and the shoulder and the waist.

Next, a process in which the information processing apparatus 100 determines whether the feet of the person are hidden using the optimum homography matrix H for each selected portion will be described. FIGS. 4, 5, and 6 are diagrams for describing a process of determining whether the feet of the person are hidden.

First, FIG. 4 will be described. In a camera image 21 illustrated in FIG. 4, an obstacle 6 exists between the person 5 and the camera. It is assumed that the coordinates (incorrect coordinates) $(x_{a0}, y_{a0})$ of the feet of the person 5, the coordinates $(x_{a1}, y_{a1})$ of the waist of the person 5, and the coordinates $(x_{a3}, y_{a3})$ of the head of the person 5 are detected from the camera image 21.

For convenience of description, an optimum combination of the homography matrices H of the homography matrix H of the waist of the person 5 and the homography matrix H of the head of the person 5 is referred as a combination of a homography matrix $H_{1op}$ and a homography matrix $H_{3op}$. Note that the homography matrix H corresponding to the feet is the homography matrix $H_0$.

Coordinates obtained by converting the coordinates $(x_{a0}, y_{a0})$ of the feet of the person 5 into a map 26 using the homography matrix $H_0$ by the information processing apparatus 100 are set as $(X_{a0}, Y_{a0})$. Coordinates obtained by converting the coordinates $(x_{a1}, y_{a1})$ of the waist of the person 5 into the map 26 using the homography matrix $H_{1op}$ by the information processing apparatus 100 are set as $(X_{a1}, Y_{a1})$. Coordinates obtained by converting the coordinates $(x_{a3}, y_{a3})$ of the head of the person 5 into the map 26 using the homography matrix $H_{3op}$ by the information processing apparatus 100 are set as $(X_{a3}, Y_{a3})$.

As illustrated in FIG. 4, when the feet of person 5 is hidden, the coordinate $(X_{a0}, Y_{a0})$ is relatively separated from the positions of $(X_{a1}, Y_{a1})$ and $(X_{a3}, Y_{a3})$.

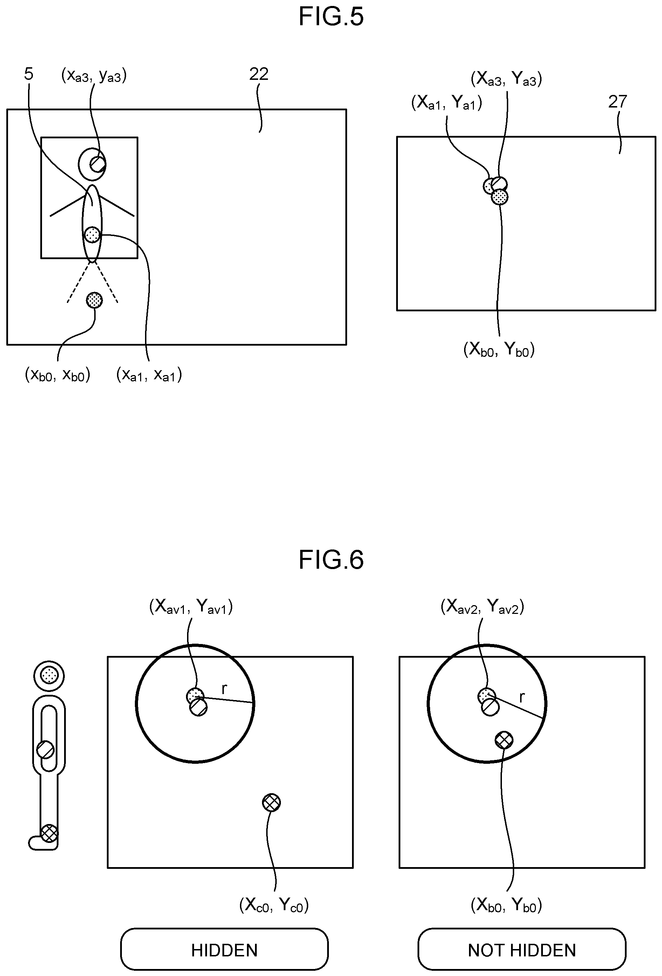

Next, FIG. 5 will be described. In the example illustrated in FIG. 5, it is assumed that the coordinates $(x_{b0}, y_{b0})$ of the feet of the person 5, the coordinates $(x_{a1}, y_{a1})$ of the waist of the person 5, and the coordinates $(x_{a3}, y_{a3})$ of the head of the person 5 are detected from a camera image 22.

For convenience of description, an optimum combination of the homography matrices H of the homography matrix H of the waist of the person 5 and the homography matrix H of the head of the person 5 is referred as a combination of a homography matrix $H_{1op}$ and a homography matrix $H_{3op}$. Note that the homography matrix H corresponding to the feet is the homography matrix $H_0$.

Coordinates obtained by converting the coordinates $(x_{b0}, y_{b0})$ of the feet of the person 5 into a map 27 using the homography matrix $H_0$ by the information processing apparatus 100 are set as $(X_{b0}, Y_{b0})$. Coordinates obtained by converting the coordinates $(x_{a1}, y_{a1})$ of the waist of the person 5 into the map 27 using the homography matrix $H_{1op}$ by the information processing apparatus 100 are set as $(X_{a1}, Y_{a1})$. Coordinates obtained by converting the coordinates $(x_{a3}, y_{a3})$ of the head of the person 5 into the map 27 using the homography matrix $H_{3op}$ by the information processing apparatus 100 are set as $(X_{a3}, Y_{a3})$.

As illustrated in FIG. 5, when the feet of the person 5 are not hidden, $(X_{a1}, Y_{a1})$, $(X_{a3}, Y_{a3})$, and $(X_{b0}, Y_{b0})$ are close to each other.

That is, the information processing apparatus 100 determines whether the feet of the person are hidden by executing the following processing. The information processing apparatus 100 converts the coordinates of the feet of the person of the camera image into the coordinates of the map using the homography matrix $H_0$. The information processing apparatus 100 converts the coordinates of each portion other than the feet (for example, the head, the waist, and the like) among the plurality of portions of the person into the coordinates of the map using the optimum homography matrix H, and calculates the average coordinate of the coordinates.

The information processing apparatus 100 determines that the feet of the person are hidden when the distance between the coordinates of the map obtained from the coordinates of the feet of the person and the average coordinate is a threshold r or more. Meanwhile, the information processing apparatus 100 determines that the feet of the person are not hidden when the distance between the coordinates of the map obtained from the coordinates of the feet of the person and the average coordinate is less than the threshold r.

FIG. 6 will be described. For example, the average coordinate obtained as a result of converting each portion other than the feet (for example, the head, the waist, and the like) among the plurality of portions of the person into the coordinates of the map by the combination of the optimum homography matrices H is set as $(X_{av1}, Y_{av1})$. A result of converting the coordinates of the feet of the person into the coordinates of the map by the homography matrix $H_0$ is set as coordinates $(X_{a0}, Y_{a0})$. Here, since the distance between the average coordinates $(X_{av1}, Y_{av1})$ and the coordinates $(X_{a0}, Y_{a0})$ is the threshold r or more, the information processing apparatus 100 determines that the feet of the person are hidden.

For example, the average coordinate obtained as a result of converting each portion other than the feet (for example, the head, the waist, and the like) among the plurality of portions of the person into the coordinates of the map by the combination of the optimum homography matrices H is set as $(X_{av2}, Y_{av2})$. A result of converting the coordinates of the feet of the person into the coordinates of the map by the homography matrix $H_0$ is set as coordinates $(X_{b0}, Y_{b0})$. Here, since the distance between the average coordinates $(X_{av2}, Y_{av2})$ and the coordinates $(X_{b0}, Y_{b0})$ is the threshold r or more, the information processing apparatus 100 determines that the feet of the person are not hidden.

An example of the process in which the information processing apparatus 100 determines whether the feet of the person are hidden was described above.

When it is determined that the feet of the person are not hidden, the information processing apparatus 100 converts the coordinates of the feet of the person of the camera image into the coordinates of the map using the homography matrix $H_0$, and maps the converted coordinates of the map on the floor map. The floor map is information obtained by adding arrangement information of products of the store in addition to the information of the map described above.

Meanwhile, when it is determined that the feet of the person are hidden, the information processing apparatus 100 converts the coordinates of the head of the person of the camera image into the coordinates of the map using the optimum homography matrix H for the head, and maps the converted coordinates to the coordinates of the floor map corresponding to the coordinates of the map. Note that the optimum homography matrix H for the portion is determined in advance by the processing described in FIG. 3.

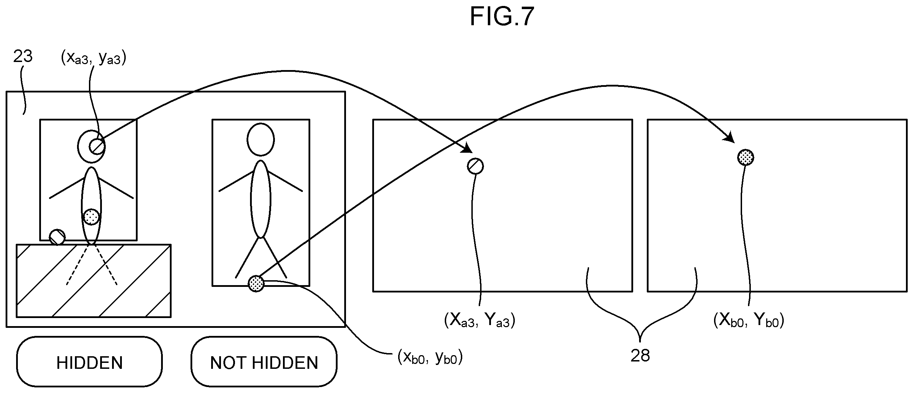

FIG. 7 is a diagram for describing mapping onto the floor map. When it is determined that the feet of the person are hidden, the information processing apparatus 100 converts the coordinates $(x_{a3}, Y_{a3})$ of the head of the person in a camera image 23 into the coordinates of the map using the optimum homography matrix H for the head, and maps the converted coordinates to the coordinates $(X_{a3}, Y_{a3})$ on a floor map 28 corresponding to the coordinates of the map.

Meanwhile, when it is determined that the feet of the person are not hidden, the information processing apparatus 100 converts the coordinates $(x_{b0}, y_{b0})$ of the feet of the person of the camera image 23 into the coordinates of the map using the optimum homography matrix H for the feet, and maps the converted coordinates to the coordinates $(X_{b0}, Y_{b0})$ on the floor map 28 corresponding to the coordinates of the map.

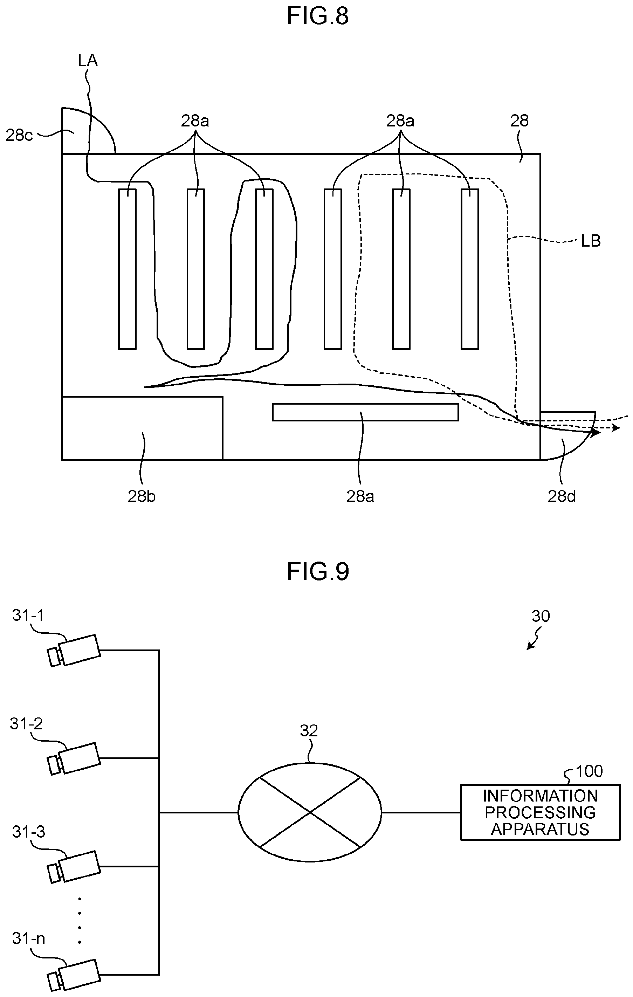

The information processing apparatus 100 draws a movement trace of the person on the floor map 28 by repeatedly executing the above processing on time-series camera images. FIG. 8 is a diagram illustrating an example of the movement trace of the person drawn on the floor map. For example, the floor map 28 illustrated in FIG. 8 is displayed on a display device or the like. In the example illustrated in FIG. 8, a plurality of shelves 28a, a cash register 28b, and doors 28c and 28d are set in advance on the floor map 28. The information processing apparatus 100 causes the display device to display a display screen on which the information of FIG. 8 is set. For example, the floor map 28 is a map of the inside of the store on a two-dimensional plane including a shelf region where products are arranged and a passage region where people move.

The information processing apparatus 100 maps a movement trace LA of a certain person A on the floor map 28 by executing the above processing on time-series camera images obtained by photographing the person A. From the movement trace LA, it can be seen that the person A entered the store through the door 28c, checked out at the cash register 28b after seeing several shelves 28a, and left the store through the door 28d.

Similarly, the information processing apparatus 100 maps a movement trace LB of a certain person B on the floor map 28 by executing the above processing on time-series camera images obtained by photographing the person B. From the movement trace LB, it can be seen that the person B entered the store through the door 28d, did not purchase anything after seeing several shelves 28a, and then left the store through the door 28d. That is, the information processing apparatus 100 generates the trace of the person from an entrance to an exit in the facility on the floor map.

The information processing apparatus 100 specifies the entrance and the exit through which the person passes among the plurality of doorways in the store, and draws a trace of the person in the passage region from the specified entrance to the exit on the floor map. For example, the information processing apparatus 100 specifies an entrance and an exit by tracking a movement trace of a person in the store. Note that the expressions "entrance" in a store and "exit" in a facility include regions set for entering and leaving each floor in a facility of the first floor or a plurality of floors.

As described above, the information processing apparatus 100 specifies a plurality of portions of the person included in the camera image, and converts each of the coordinates of the specified plurality of portions on the camera image into coordinates on the map using the homography matrix H. The information processing apparatus 100 extracts any target portion among the plurality of portions based on a positional relationship of each of the coordinates on the map, and sets the coordinates of the extracted target portion on the map as the position where the person exists.

For example, when the distance between the coordinates corresponding to the feet on the map and the coordinates (average coordinates) corresponding to another portion (face, waist, or shoulder) on the map is less than the threshold r, the information processing apparatus 100 determines that the feet of the person are not hidden. Here, the information processing apparatus 100 sets the coordinates of the feet on the map as the position where the person exists. Therefore, when the feet of the person are not hidden, the position of the person can be set using highly reliable coordinates of the feet.

Meanwhile, when the distance between the coordinates corresponding to the feet on the map and the coordinates (average coordinates) corresponding to another portion (face, waist, or shoulder) on the map is the threshold r or more, the information processing apparatus 100 determines that the feet of the person are hidden. Here, the information processing apparatus 100 sets the coordinates of another portion (for example, head) instead of the coordinates of the feet on the map as the position where the person exists. Therefore, when the feet of the person are hidden, the position of the person can be set using the highly reliable coordinates of another portion.

Here, the information processing apparatus 100 calculates coordinates of each portion projected by the homography matrix for each combination of a plurality of homography matrices corresponding to each portion except the feet, and evaluates the combination of homography matrices from the distribution of the calculated coordinates. The information processing apparatus 100 specifies optimal homography matrices based on the evaluation result. As a result, even when the height of the person and the height of each portion from the floor surface are not known in advance, the position of the person on the map can be accurately calculated from a portion other than the feet using the optimum homography matrices.

The information processing apparatus 100 can notify the user of information on the movement trace of the person by repeatedly executing the process of mapping the coordinates of the person on the map obtained by the above process on the floor map on time-series camera images. Note that, in the present embodiment, an example in which the coordinates are mapped on the floor map from the coordinates of the map is described, but when the coordinates of the map and the coordinates of the floor map correspond one-to-one, the position of the person may be directly mapped on the floor map from the coordinates of the camera image.

Next, an example of an information processing system including the information processing apparatus 100 that executes the above-described processing will be described. FIG. 9 is a diagram illustrating an information processing system according to the present embodiment. As illustrated in FIG. 9, an information processing system 30 includes camera devices 31-1, 31-2, 31-3, ..., and 31-n and the information processing apparatus 100. The camera devices 31-1 to 31-n (n is any natural number) and the information processing apparatus 100 are connected to each other via a network 32.

For example, various communication networks such as an intranet used in a store such as a retail store can be adopted as the network 32 regardless of wired or wireless communication. The network 32 may be, and for example, an intranet and the Internet configured via a network device such as a gateway or another device (not illustrated), instead of being a single network. Here, the expression "in a store" such as a retail store is not limited to indoor, and may include outdoor on a site such as a retail store.

The camera devices 31-1 to 31-n are monitoring cameras installed in each sales room or cash register area in a store such as a retail store. In the following description, the camera devices 31-1 to 31-n are collectively referred to as a camera device 31. Video data captured by the camera device 31 is transmitted to the information processing apparatus 100 via the network 32. The video data includes time-series camera images. Inside a facility is, for example, inside a store such as a retail store.

The information processing apparatus 100 receives the video data from the camera device 31, and executes the above-described processing on the time-series camera images included in the received video data.

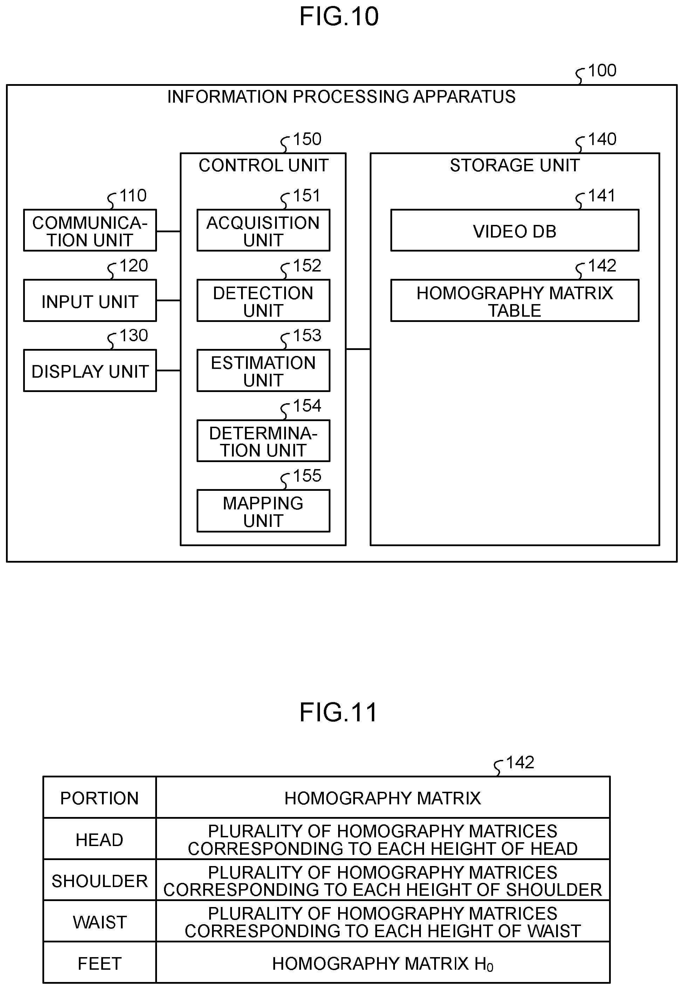

Next, a configuration example of the information processing apparatus 100 will be described. FIG. 10 is a functional block diagram illustrating a configuration of an information processing apparatus according to the present embodiment. As illustrated in FIG. 10, the information processing apparatus 100 includes a communication unit 110, an input unit 120, a display unit 130, a storage unit 140, and a control unit 150.

The communication unit 110 executes data communication with the camera device 31 and the like via the network 32. For example, the communication unit 110 receives a video of a person from the camera device 31.

The input unit 120 is an input device that inputs various types of information to the control unit 150 of the information processing apparatus 100. For example, the input unit 120 corresponds to a keyboard, a mouse, a touch panel, or the like.

The display unit 130 is a display device that displays information output from the control unit 150.

The storage unit 140 includes a video DB 141 and a homography matrix table 142. The storage unit 140 is a memory or the like.

The video DB 141 stores data of the time-series camera images captured by the camera device 31. The video DB 141 can store position information from each camera image such as individual products, regions of sales room areas, and coordinates for specifying the extracted person in association with each camera image. The video DB 141 may store skeleton information of the person detected and specified from the camera image. Generation of the skeleton information will be described later.

The homography matrix table 142 is a table that stores a plurality of homography matrices corresponding to each portion. FIG. 11 is a diagram illustrating an example of a data structure of a homography matrix table. As illustrated in FIG. 11, the homography matrix table 142 associates a portion with a homography matrix.

In the example illustrated in FIG. 11, the regions are the head, the shoulder, the waist, and the feet. In the portion "head", a plurality of homography matrices each corresponding to a height of the head are set. For example, a homography matrix is set for each height in increments of 5 cm at the heights from 120 cm to 190 cm of the head.

In the portion "shoulder", a plurality of homography matrices each corresponding to a height of the shoulder are set. For example, a homography matrix is set for each height in increments of 5 cm at the heights from 100 cm to 170 cm of the shoulder.

In the portion "waist", a plurality of homography matrices each corresponding to a height of the waist are set. For example, a homography matrix is set for each height in increments of 5 cm at the heights from 40 cm to 70 cm of the waist.

In the portion "feet", one homography matrix $H_0$ for the feet is set.

Next, the control unit 150 will be described. The control unit 150 includes an acquisition unit 151, a detection unit 152, an estimation unit 153, a determination unit 154, and a mapping unit 155. The control unit 150 is a central processing unit (CPU), a graphics processing unit (GPU), or the like.

The acquisition unit 151 acquires video data (data of time-series camera images) from the camera device 31. The acquisition unit 151 stores the acquired video data in the video DB 141.

The detection unit 152 detects a region of a person from the camera image stored in the video DB 141, and generates skeleton information of the person from the detected region of the person. The detection unit 152 specifies coordinates (coordinates of the camera image) of each portion (face, shoulder, waist, or feet) from the skeleton information, and stores the coordinates of each portion in the video DB 141 in association with the camera image.

First, an example of processing in which the detection unit 152 detects the region of the person from the camera image will be described. The detection unit 152 extracts the person from the camera image by using an existing detection algorithm such as YOU Only Look Once (YOLO), Single Shot Multibox Detector (SSD), or Region Based Convolutional Neural Networks (RCNN). The extracted person is indicated by a bounding box (BBOX) that rectangularly surrounds the region on the image.

Next, an example of processing in which the detection unit 152 generates skeleton information from the region of the person will be described. The detection unit 152 acquires the skeleton information by inputting the extracted region of the person (the image of BBOX) to a trained machine learning model constructed using an existing algorithm such as DeepPose or OpenPose.

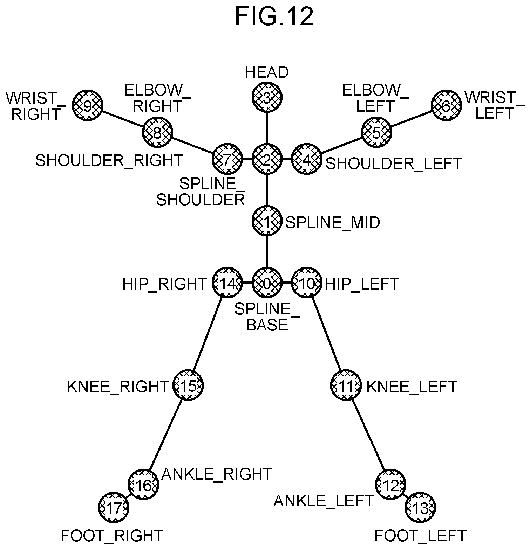

FIG. 12 is a diagram illustrating an example of the skeleton information. As the skeleton information, 18 pieces (0 to 17) of definition information in which each joint specified by a known skeleton model is numbered can be used. For example, No. 7 is assigned to the right shoulder joint (SHOULDER_RIGHT), No. 5 is assigned to the left elbow joint (ELBOW_LEFT), No. 11 is assigned to the left knee joint (KNEE_LEFT), and No. 14 is assigned to the right hip joint (HIP_RIGHT). Therefore, the coordinate information of the 18 skeletons illustrated in FIG. 12 can be acquired from the image data, and for example, "X coordinate = X7, Y coordinate = Y7" is acquired as the position of the right shoulder joint of No. 7.

For example, the detection unit 152 acquires the coordinates of a portion of No. 3 in the skeleton information (HEAD) as the coordinates of the portion "head". The detection unit 152 acquires the coordinates of the right shoulder joint (SHOULDER_RIGHT) of No. 7 in the skeleton information as the coordinates of the portion "shoulder". Note that the detection unit 152 may acquire the coordinates of the left shoulder joint (SHOULDER_LEFT) of No. 4 in the skeleton information as the coordinates of the portion "shoulder".

The detection unit 152 acquires the coordinates of the portion of No. 0 (SPLINE _BASE) in the skeleton information as the coordinates of the portion "waist". The detection unit 152 acquires the average coordinates of the coordinates of the portion of No. 13 (FOOT _LEFT) and the coordinates of the portion of No. 17 (FOOT _RIGHT) in the skeleton information as the coordinates of the portion "feet". Note that the detection unit 152 may acquire the coordinates of the center of a lower end of the region (BBOX) of the person as the coordinates of the portion "feet".

The estimation unit 153 selects (estimates), from the homography matrix table 142, a combination of optimum homography matrices corresponding to each portion registered in association with the camera image from the video DB 141. For example, the estimation unit 153 calculates the coordinates of each portion projected on the map using the homography matrix for each combination of a plurality of homography matrices corresponding to each portion except the feet, and evaluates the combination of homography matrices from the distribution of the calculated coordinates. The estimation unit 153 estimates the combination of the optimal homography matrices based on the evaluation result.

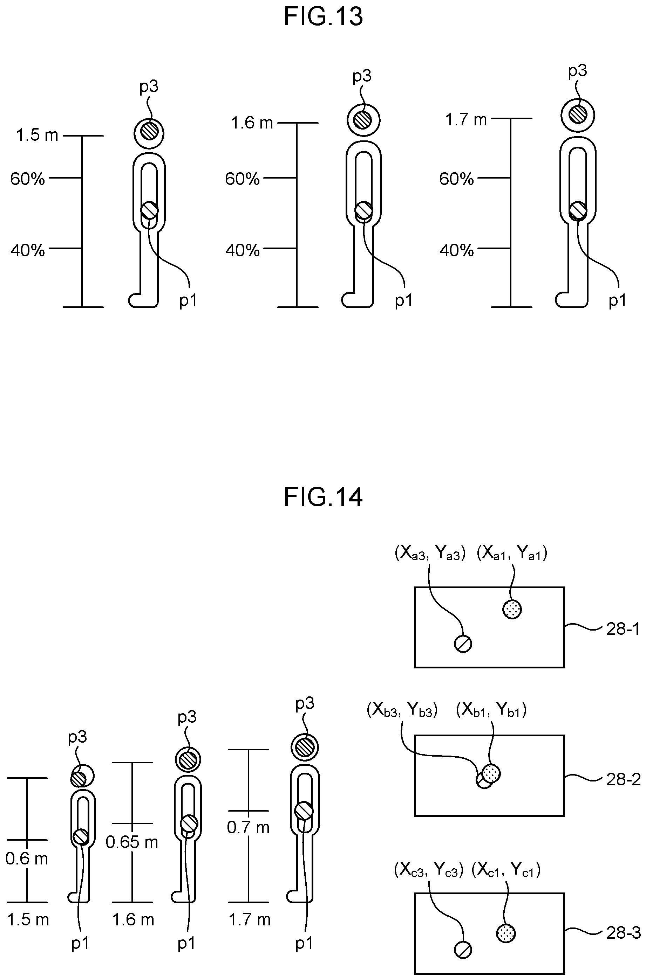

The processing of the estimation unit 153 basically corresponds to the processing described with reference to FIG. 3, but as described with reference to FIG. 13, the number of combinations of homography matrices to be evaluated can be reduced by narrowing down the heights of the waist with respect to the position of the heights of the head.

FIG. 13 is a diagram (1) for describing the processing of the estimation unit. Here, the description will be made using the head and the waist as the portions. For example, the estimation unit 153 narrows down the homography matrix of the waist p1 to be combined with the homography matrix of the height "1.5 m" of the head p3 to the homography matrices of the waist included between 40% of 1.5 m (0.6 m) and 60% of 1.5 m (0.9 m), and performs the evaluation.

The estimation unit 153 narrows down the homography matrix of the waist p1 to be combined with the homography matrix of the height "1.6 m" of the head p3 to the homography matrices of the waist included between 40% of 1.6 m (0.64 m) and 60% of 1.6 m (0.96 m), and performs the evaluation.

The estimation unit 153 narrows down the homography matrix of the waist p1 to be combined with the homography matrix of the height "1.7 m" of the head p3 to the homography matrices of the waist included between 40% of 1.7 m (0.68 m) and 60% of 1.7 m (0.1.02 m), and performs the evaluation.

FIG. 14 is a diagram (2) for describing the processing of the estimation unit. For example, the estimation unit 153 converts the coordinates of the head of the person of the camera image into the coordinates $(X_{a3}, Y_{a3})$ of a map 28-1 using the homography matrix of the height "1.5 m" of the head p3. The estimation unit 153 converts the coordinates of the waist of the person of the camera image into the coordinates $(X_{a1}, Y_{a1})$ of the map 28-1 using the homography matrix of the height "0.6 m" of the waist p1.

The estimation unit 153 converts the coordinates of the head of the person of the camera image into the coordinates $(X_{b3}, Y_{b3})$ of a map 28-2 using the homography matrix of the height "1.6 m" of the head p3. The estimation unit 153 converts the coordinates of the waist of the person of the camera image into the coordinates $(X_{b1}, Y_{b1})$ of the map 28-2 using the homography matrix of the height "0.65 m" of the waist p1.

The estimation unit 153 converts the coordinates of the head of the person of the camera image into the coordinates $(X_{c3}, Y_{c3})$ of a map 28-3 using the homography matrix of the height "1.7 m" of the head p3. The estimation unit 153 converts the coordinates of the waist of the person of the camera image into the coordinates $(X_{c1}, Y_{c1})$ of the map 28-3 using the homography matrix of the height "0.7 m" of the waist p1.

When the estimation unit 153 evaluates the distance of coordinates of each of the maps 28-1 to 28-3, the distance between the coordinates $(X_{b3}, Y_{b3})$ and $(X_{p1}, Y_{p1})$ of the map 28-2 is the shortest, and the score is also the highest. The estimation unit 153 estimates that a combination of the homography matrix at the height "1.6 m" of the head p3 and the homography matrix at the height "0.6 m" of the waist p1 having the shortest distance therebetween is a combination of the optimum homography matrices. As a result, it can also be estimated that the height of the person in the camera image is "1.6 m" and the height of the waist of the person is "0.6 m".

The estimation unit 153 outputs the estimated optimum homography matrix of each portion to the determination unit 154 and the mapping unit 155.

The determination unit 154 determines whether the feet of the person in the camera image are hidden. For example, the determination unit 154 converts each portion other than the feet (head, shoulder, waist, or the like) among the plurality of portions of the person into the coordinates of the map using the combination of the optimum homography matrices, and calculates the average coordinates.

When the distance between the average coordinates and the coordinates of the feet of the person on the map is the threshold r or more, the determination unit 154 determines that the feet of the person are hidden. Meanwhile, when the distance between the average coordinates and the coordinates of the feet of the person on the map is less than the threshold r, the determination unit 154 determines that the feet of the person are not hidden.

The determination unit 154 outputs the determination result to the mapping unit 155. Other descriptions of the determination unit 154 are similar to the contents described in FIGS. 4 to 6 and the like.

The mapping unit 155 maps the coordinates of the person on the map using the determination result of the determination unit 154. When the feet of the person are not hidden, the mapping unit 155 converts the coordinates of the person of the camera image into the coordinates of the map using the homography matrix $H_0$.

When the feet of the person are hidden, the mapping unit 155 converts the coordinates of the person of the camera image into the coordinates of the map using the optimum homography matrix H for the height of the head. For example, when the height of the head of the person is estimated to be "1.6 m" by the processing described in FIG. 14, the mapping unit 155 converts the coordinates of the person of the camera image into the coordinates of the map using the homography matrix H of the height "1.6 m" of the head.

The mapping unit 155 maps the position of the person on the coordinates of the floor map corresponding to the coordinates of the person of the map. The mapping unit 155 repeatedly executes the above processing on the time-series camera images to generate the floor map, and outputs the generated floor map to the display unit 130 to be displayed. For example, the floor map to be displayed on the display unit 130 by the mapping unit 155 corresponds to the floor map 28 illustrated in FIG. 8.

Other descriptions of the mapping unit 155 are similar to the contents described in FIGS. 7 and 8 and the like.

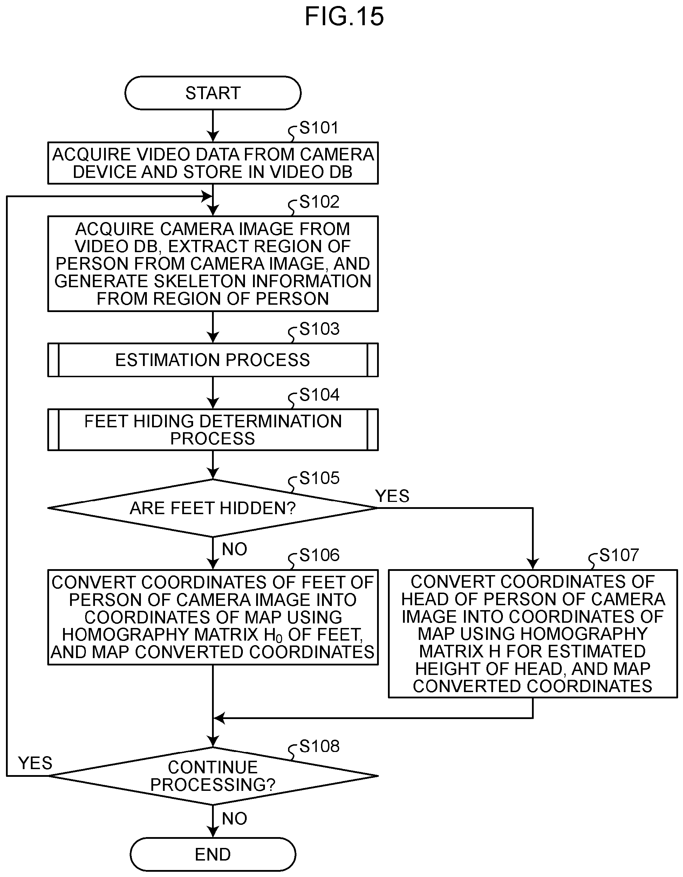

Next, an example of a processing procedure of the information processing apparatus 100 according to the present embodiment will be described. FIG. 15 is a flowchart illustrating a processing procedure of the information processing apparatus according to the present embodiment. As illustrated in FIG. 15, the acquisition unit 151 of the information processing apparatus 100 acquires video data from the camera device 31 and stores the video data in the video DB 141 (step S101).

The detection unit 152 of the information processing apparatus 100 acquires the camera image from the video DB 141, detects a region of a person from the camera image, and generates skeleton information from the region of the person (step S102). The estimation unit 153 of the information processing apparatus 100 executes an estimation process (step S103).

The determination unit 154 of the information processing apparatus 100 executes a feet hiding determination process (step S104). When it is determined that the feet are not hidden (step S105, No), the mapping unit 155 of the information processing apparatus 100 proceeds to step S106. The information processing apparatus 100 converts the coordinates of the feet of the camera image into the coordinates of the map using the homography matrix $H_0$ of the feet, maps the coordinates on the floor map (step S106), and proceeds to step S108.

Meanwhile, when it is determined that the feet are hidden (step S105, Yes), the mapping unit 155 proceeds to step S107. The information processing apparatus 100 converts the coordinates of the head of the camera image into the coordinates of the map using the homography matrix H corresponding to the estimated height of the head, and maps the coordinates on the floor map (step S107).

When the processing is continued (step S108, Yes), the information processing apparatus 100 proceeds to step S102. Meanwhile, when the processing is not continued (step S108, No), the information processing apparatus 100 ends the processing.

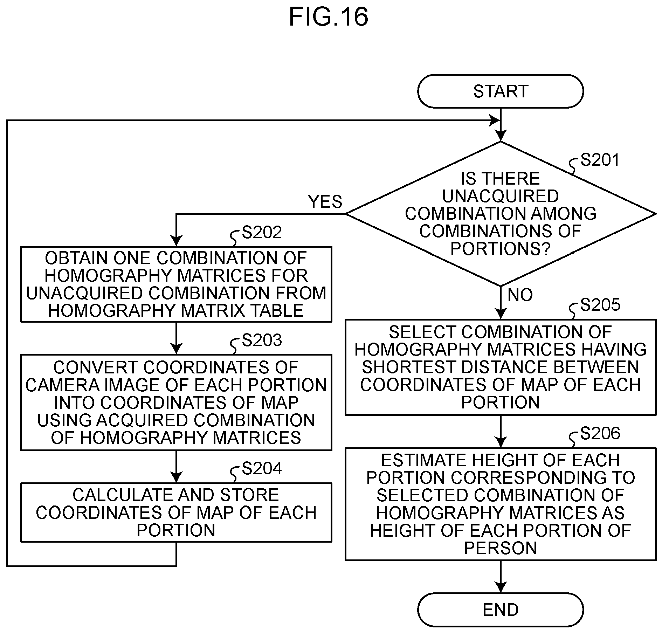

Next, an example of the processing procedure of the estimation process described in step S103 of FIG. 15 will be described. FIG. 16 is a flowchart illustrating the processing procedure of the estimation process. As illustrated in FIG. 16, when there is an unacquired combination among the combinations of the portions (head, shoulder, waist, and the like) (step S201, Yes), the estimation unit 153 of the information processing apparatus 100 proceeds to step S202.

The estimation unit 153 acquires one combination of homography matrices for an unacquired combination from the homography matrix table 142 (step S202). The estimation unit 153 converts the coordinates of the camera image of each portion into the coordinates of the map using the acquired combination of homography matrices (step S203).

The estimation unit 153 calculates and stores the coordinates of the map of each portion (step S204), and proceeds to step S201.

Meanwhile, when there is no unacquired combination among the combinations of the portions (head, shoulder, waist, and the like) (step S201, No), the estimation unit 153 proceeds to step S205.

The estimation unit 153 selects a combination of homography matrices having the shortest distance between the coordinates of the map of each portion (step S205). The estimation unit 153 estimates the height of each portion corresponding to the selected combination of homography matrices as the height of each portion of the person (step S206).

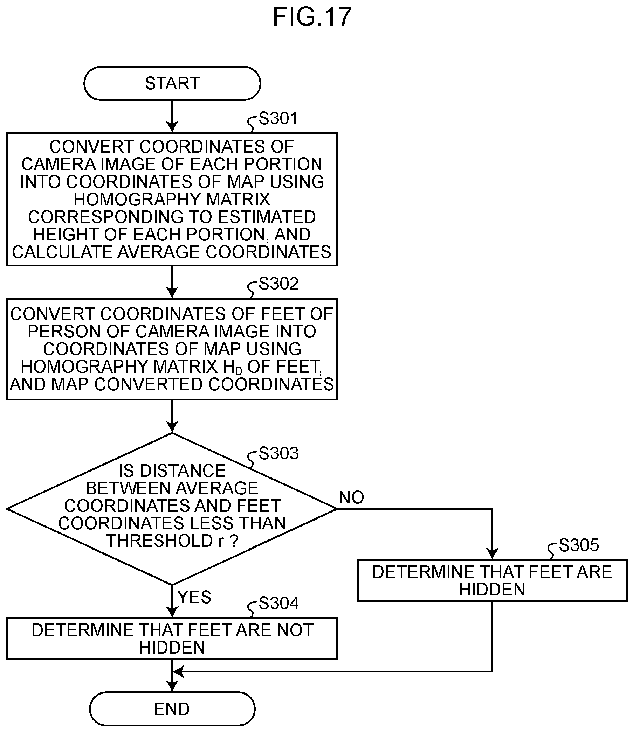

Next, an example of the processing procedure of the feet hiding determination process described in step S104 of FIG. 15 will be described. FIG. 17 is a flowchart illustrating the processing procedure of the feet hiding determination process. As illustrated in FIG. 17, the determination unit 154 of the information processing apparatus 100 converts the coordinates of the camera image of each portion into the coordinates of the map using the homography matrix corresponding to the estimated height of each portion, and calculates the average coordinates (step S301).

The determination unit 154 converts the coordinates of the camera image of the feet into the coordinates of the map using the homography matrix $H_0$ of the feet, and performs mapping (step S302).

When the distance between the average coordinates and the coordinates of the feet is less than the threshold r (step S303, Yes), the determination unit 154 determines that the feet are not hidden (step S304). Meanwhile, when the distance between the average coordinates and the coordinates of the feet is not less than the threshold r (step S303, No), the determination unit 154 determines that the feet are hidden (step S305).

The processing procedure of the information processing apparatus 100 according to the present embodiment was described above.

Next, effects of the information processing apparatus 100 according to the present embodiment will be described. The information processing apparatus 100 specifies a plurality of portions of the person included in the camera image, and converts each of the coordinates of the specified plurality of portions on the camera image into coordinates on the map using the homography matrix. The information processing apparatus 100 extracts any target portion among the plurality of portions based on a positional relationship of each of the coordinates on the map, and sets the coordinates of the extracted target portion on the map as the position where the person exists. As a result, accuracy of the position of the person on the map can be improved.

When the distance between the coordinates corresponding to the feet on the map and the coordinates (average coordinates) corresponding to another portion (face, waist, or shoulder) on the map is less than the threshold r, the information processing apparatus 100 determines that the feet of the person are not hidden. Here, the information processing apparatus 100 sets the coordinates of the feet on the map as the position where the person exists. Therefore, when the feet of the person are not hidden, the position of the person can be set using highly reliable coordinates of the feet.

When the distance between the coordinates corresponding to the feet on the map and the coordinates (average coordinates) corresponding to another portion (face, waist, or shoulder) on the map is the threshold r or more, the information processing apparatus 100 determines that the feet of the person are hidden. Here, the information processing apparatus 100 sets the coordinates of another portion (for example, head) instead of the coordinates of the feet on the map as the position where the person exists. Therefore, when the feet of the person are hidden, the position of the person can be set using the highly reliable coordinates of another portion.

The information processing apparatus 100 calculates coordinates of each portion projected by the homography matrix for each combination of a plurality of homography matrices corresponding to each portion except the feet, and evaluates the combination of homography matrices from the distribution of the calculated coordinates. The information processing apparatus 100 specifies optimal homography matrices based on the evaluation result. As a result, even when the height of the person and the height of each portion from the floor surface are not known in advance, the position of the person on the map can be accurately calculated from a portion other than the feet using the optimum homography matrices.

The information processing apparatus 100 can notify the user of information on the movement trace of the person by repeatedly executing the process of mapping the coordinates of the person on the map obtained by the above process on the floor map on time-series camera images.

Note that the information processing apparatus 100 was described that the information processing apparatus 100 specifies the position of the person on the map using the feet of the person as a portion set in advance. However, the information processing apparatus 100 may specify the position of the person on the map using a portion other than the feet as a portion set in advance. For example, the information processing apparatus 100 can use the head.

The information processing apparatus 100 specifies a plurality of portions from the person in the camera image, and determines whether the head of the person are hidden. When the head of the person is not hidden, the information processing apparatus 100 converts the coordinates of the person into the coordinates of the map using a homography matrix $H_0$ (homography matrix corresponding to the head). Meanwhile, when the head of the person are hidden, the information processing apparatus 100, the information processing apparatus 100 converts the coordinates of the person into the coordinates of the map using an appropriate homography matrix H corresponding to a portion other than the head (feet, waist, or the like) of the person.

More specifically, for example, the determination unit 154 converts the coordinates of the camera image of the head into the coordinates of the map using the homography matrix $H_0$ of the head. Then, when the distance between the average coordinates and the coordinates of the head is less than the threshold r, the determination unit 154 determines that the head is not hidden. Meanwhile, when the distance between the average coordinates and the coordinates of the head is not less than the threshold r, the determination unit 154 determines that the head is hidden.

Next, for example, when it is determined that the head is not hidden, the mapping unit 155 converts the coordinates of the head of the camera image into the coordinates of the map using the homography matrix $H_0$, and maps the converted coordinates on the floor map. Meanwhile, when it is determined that the head is hidden, the mapping unit 155 converts the coordinates of the feet of the camera image into the coordinates of the map using the homography matrix H, and maps the converted coordinates on the floor map.

As a result, the information processing apparatus 100 can improve the accuracy of the position of the person on the map even when the portion set in advance is hidden.

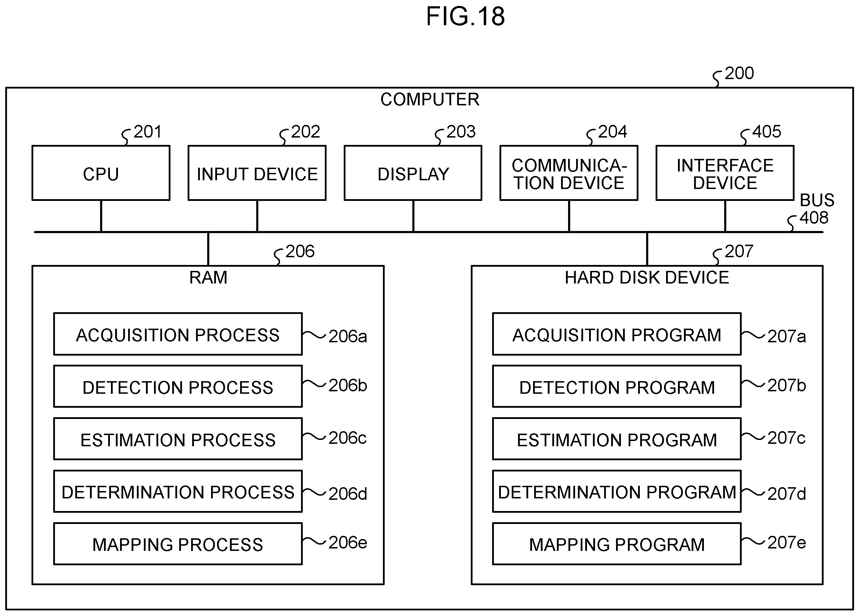

Next, an example of a hardware configuration of a computer that implements functions similar to those of the information processing apparatus 100 described above will be described. FIG. 18 is a diagram illustrating an example of the hardware configuration of the computer that implements functions similar to those of the information processing apparatus according to the present embodiment.

As illustrated in FIG. 18, a computer 200 includes a CPU 201 that executes various types of arithmetic processing, an input device 202 that receives an input of data from a user, and a display 203. The computer 200 also includes a communication device 204 that exchanges data with the camera device 31 and the like via a wired or wireless network, and an interface device 405. The computer 200 also includes a RAM 206 that temporarily stores various types of information, and a hard disk device 207. Each of the devices 201 to 207 is connected to a bus 408.

The hard disk device 207 includes an acquisition program 207a, a detection program 207b, an estimation program 207c, a determination program 207d, and a mapping program 207e. The CPU 201 reads the programs 207a to 207e and loads the programs on the RAM 206.

The acquisition program 207a functions as an acquisition process 206a. The detection program 207b functions as a detection process 206b. The estimation program 207c functions as an estimation process 206c. The determination program 207d functions as a determination process 206d. The mapping program 207e functions as a mapping process 206e.

The processing of the acquisition process 206a corresponds to the processing of the acquisition unit 151. The processing of the detection process 206b corresponds to the processing of the detection unit 152. The processing of the estimation process 206c corresponds to the processing of the estimation unit 153. The processing of the determination process 206d corresponds to the processing of the determination unit 154. The processing of the mapping process 206e corresponds to the processing of the mapping unit 155.

The programs 207a to 207e don't always be stored in the hard disk device 207 initially. For example, each program is stored in a "portable physical medium" such as a flexible disk (FD), a CD-ROM, a DVD, a magneto-optical disk, or an IC card to be inserted into the computer 200. Then, the computer 200 may read and execute the programs 207a to 207e.

The accuracy of the position of the person on the map can be improved.

**Claims**

1. An analysis program causing a computer to execute a process comprising:

    specifying (S103) a plurality of portions of a person included in an image configuring a video obtained by capturing in a facility by analyzing the video;
    converting (S203, S204) each coordinate position on the image of the plurality of specified portions of the person into each coordinate position on a map in the facility;
    extracting (S104) any target portion among the plurality of portions based on each positional relationship of the converted coordinate positions on the map; and
    setting (S106, S107) the coordinate position of the extracted target portion on the map as a position where the person exists.

2. The analysis program according to claim 1, wherein, the extracting (S104) includes, when a first portion exists at a position different from a distribution range of a plurality of other portions other than the first portion among the plurality of portions based on a comparison result between a coordinate position of the first portion on the map and a distribution of coordinate positions of the plurality of other portions on the map, extracting a second portion included in the plurality of other portions as the target portion.

3. The analysis program according to claim 1, wherein the process further includes:

    acquiring (S104) a plurality of images including the person from a camera;
    detecting (S104) each coordinate position of a plurality of portions including a head and feet of the person by performing image analysis on each of the plurality of images;
    projectively converting (S203, S204) the plurality of detected coordinate positions onto the map using a homography matrix; and
    when a difference between the coordinate position of the feet projectively converted onto the map and a representative coordinate position of portions other than the feet is a threshold or more, setting (S106, S107) the coordinate position of the head of the person as a position where the person exists on the map.

4. The analysis program according to claim 3, wherein the process further includes selecting (S106, S107) a first homography matrix or a second homography matrix based on a distribution of the coordinate positions of the plurality of portions obtained as a result of projective conversion of coordinate positions on each of the images of the plurality of portions including the head and the feet of the person onto the map using the first homography matrix, and the distribution of the coordinate positions of the plurality of portions obtained as a result of the projective conversion onto the map using the second homography matrix different from the first homography matrix.

5. The analysis program according to claim 4, wherein, the setting (S106, S107) includes, when a difference between the representative coordinate position of the portion other than the feet obtained by projectively converting each coordinate position of a plurality of portions including the head and the feet of the person onto the map using the first homography matrix or the second homography matrix selected at selecting and a coordinate position of the feet projected onto the map is a threshold or more, setting the coordinate position of the head of the person as a position where the person exists on the map.

6. The analysis program according to claim 1, wherein the process further includes:

   generating (S102) skeleton information of the person included in the video; and
   specifying (S103, S104) each coordinate position of the plurality of portions of the person on the image based on joint positions of the generated skeleton information.

7. The analysis program according to claim 1, wherein the process further includes:

   acquiring a floor map indicating a configuration in a store on a two-dimensional plane including a shelf region in which products are arranged and a passage region in which a person moves;
   drawing a trace of the person on the floor map in the passage region from an entrance to an exit through which the person passes among a plurality of doorways in the store based on a time-series change in a position where the person exists; and
   displaying a screen in which the trace of the person is drawn on the floor map on a display device.

8. The analysis program according to claim 2, wherein the process further includes:

   when it is determined that a difference between the coordinate position of the first portion and a coordinate position indicating a set of the plurality of other portions on the map satisfies a first condition, generating a first trace of the person using a coordinate position of the first portion;
   when it is determined that a difference between the coordinate position of the first portion and the coordinate position indicating a set of the plurality of other portions on the map satisfies a second condition, generating a second trace of the person using a coordinate position of the second portion; and
   generating a trace of the person on the floor map based on a third trace obtained by integrating the first trace and the second trace.

9. An analysis method carried out by a computer (10), comprising:

   specifying (S103) a plurality of portions of a person included in an image configuring a video obtained by capturing in a facility by analyzing the video;
   converting (S203, S204) each coordinate position on the image of the plurality of specified portions of the person into each coordinate position on a map in the facility;
   extracting (S104) any target portion among the plurality of portions based on each positional relationship of the converted coordinate positions on the map; and
   setting (S106, S107) the coordinate position of the extracted target portion on the map as a position where the person exists.

10. The analysis method according to claim 9, wherein, the extracting (S104) includes, when a first portion exists at a position different from a distribution range of a plurality of other portions other than the first portion among the plurality of portions based on a comparison result between a coordinate position of the first portion on the map and a distribution of coordinate positions of the plurality of other portions on the map, extracting a second portion included in the plurality of other portions as the target portion.

11. An information processing apparatus (100) comprising a control unit (150) configured to execute a process comprising:

   specifying a plurality of portions of a person included in an image configuring a video obtained by capturing in a facility by analyzing the video;

converting each coordinate position on the image of the plurality of specified portions of the person into each coordinate position on a map in the facility;

extracting any target portion among the plurality of portions based on each positional relationship of the converted coordinate positions on the map; and

setting the coordinate position of the extracted target portion on the map as a position where the person exists.

12. The information processing apparatus (100) according to claim 11, wherein, the extracting includes, when a first portion exists at a position different from a distribution range of a plurality of other portions other than the first portion among the plurality of portions based on a comparison result between a coordinate position of the first portion on the map and a distribution of coordinate positions of the plurality of other portions on the map, extracting a second portion included in the plurality of other portions as the target portion.

FIG.1

FIG.2

# FIG.3

HEAD 120 cm TO 190 cm

WAIST 40 cm TO 70 cm

p3    20    P31    P11    25

p1    P32    P12

# FIG.4

5    $(x_{a3}, y_{a3})$    21    $(X_{a3}, Y_{a3})$

$(X_{a1}, Y_{a1})$    26

$(x_{a0}, x_{a0})$    $(x_{a1}, x_{a1})$    6

$(X_{a0}, Y_{a0})$

# FIG.5

# FIG.6

HIDDEN

NOT HIDDEN

FIG.7

23  $(x_{a3}, y_{a3})$

HIDDEN

NOT HIDDEN

$(x_{b0}, y_{b0})$

$(X_{a3}, Y_{a3})$

28

$(X_{b0}, Y_{b0})$

EP 4 668 235 A1

18

## FIG.8

## FIG.9

# FIG.10

INFORMATION PROCESSING APPARATUS ⌇100

CONTROL UNIT ⌇150

STORAGE UNIT ⌇140

| COMMUNICA-TION UNIT ⌇110 |
| INPUT UNIT ⌇120 |
| DISPLAY UNIT ⌇130 |

| ACQUISITION UNIT ⌇151 |
| DETECTION UNIT ⌇152 |
| ESTIMATION UNIT ⌇153 |
| DETERMINA-TION UNIT ⌇154 |
| MAPPING UNIT ⌇155 |

| VIDEO DB ⌇141 |
| HOMOGRAPHY MATRIX TABLE ⌇142 |

# FIG.11

⌇142

| PORTION | HOMOGRAPHY MATRIX |
|---|---|
| HEAD | PLURALITY OF HOMOGRAPHY MATRICES CORRESPONDING TO EACH HEIGHT OF HEAD |
| SHOULDER | PLURALITY OF HOMOGRAPHY MATRICES CORRESPONDING TO EACH HEIGHT OF SHOULDER |
| WAIST | PLURALITY OF HOMOGRAPHY MATRICES CORRESPONDING TO EACH HEIGHT OF WAIST |
| FEET | HOMOGRAPHY MATRIX $H_0$ |

# FIG.12

## FIG.13

## FIG.14

# FIG.15

START

S101

ACQUIRE VIDEO DATA FROM CAMERA DEVICE AND STORE IN VIDEO DB

S102

ACQUIRE CAMERA IMAGE FROM VIDEO DB, EXTRACT REGION OF PERSON FROM CAMERA IMAGE, AND GENERATE SKELETON INFORMATION FROM REGION OF PERSON

S103

ESTIMATION PROCESS

S104

FEET HIDING DETERMINATION PROCESS

S105

ARE FEET HIDDEN? — YES

NO

S106

CONVERT COORDINATES OF FEET OF PERSON OF CAMERA IMAGE INTO COORDINATES OF MAP USING HOMOGRAPHY MATRIX $H_0$ OF FEET, AND MAP CONVERTED COORDINATES

S107

CONVERT COORDINATES OF HEAD OF PERSON OF CAMERA IMAGE INTO COORDINATES OF MAP USING HOMOGRAPHY MATRIX H FOR ESTIMATED HEIGHT OF HEAD, AND MAP CONVERTED COORDINATES

S108

YES

CONTINUE PROCESSING?

NO

END

# FIG.16

```
                                    ┌──────────┐
                                    │  START   │
                                    └────┬─────┘
                                         │
                                         ▼
                                   ╱───────────╲        ⌐S201
                                  ╱  IS THERE    ╲
                                 ╱  UNACQUIRED     ╲
              YES              ╱ COMBINATION AMONG   ╲
      ◄──────────────────────┤  COMBINATIONS OF     ├
      │                       ╲    PORTIONS?        ╱
      │                        ╲                   ╱
      │                         ╲───────┬─────────╱
      ▼                                 │ NO
┌───────────────────────┐      ⌐S202    ▼              ⌐S205
│ OBTAIN ONE COMBINATION │     ┌─────────────────────────────┐
│  OF HOMOGRAPHY MATRICES │    │   SELECT COMBINATION OF      │
│ FOR UNACQUIRED          │    │ HOMOGRAPHY MATRICES HAVING   │
│ COMBINATION FROM        │    │ SHORTEST DISTANCE BETWEEN    │
│ HOMOGRAPHY MATRIX TABLE │    │  COORDINATES OF MAP OF EACH  │
└───────────┬─────────────┘    │        PORTION              │
            │                  └──────────────┬──────────────┘
            ▼           ⌐S203                  │           ⌐S206
┌───────────────────────┐             ┌────────▼──────────────┐
│ CONVERT COORDINATES OF │            │  ESTIMATE HEIGHT OF EACH │
│ CAMERA IMAGE OF EACH   │            │ PORTION CORRESPONDING TO │
│ PORTION INTO           │            │  SELECTED COMBINATION OF │
│ COORDINATES OF MAP     │            │  HOMOGRAPHY MATRICES AS  │
│ USING ACQUIRED         │            │  HEIGHT OF EACH PORTION  │
│ COMBINATION OF         │            │       OF PERSON          │
│ HOMOGRAPHY MATRICES    │            └────────────┬─────────────┘
└───────────┬────────────┘                         │
            ▼           ⌐S204                       ▼
┌───────────────────────┐                    ┌──────────┐
│ CALCULATE AND STORE    │                    │   END    │
│ COORDINATES OF MAP OF  │                    └──────────┘
│ EACH PORTION           │
└────────────────────────┘
```

FIG.17

```
                    ┌──────────────┐
                    │    START     │
                    └──────┬───────┘
                           │         ⌐S301
          ┌────────────────▼───────────────────┐
          │     CONVERT COORDINATES OF         │
          │  CAMERA IMAGE OF EACH PORTION      │
          │  INTO COORDINATES OF MAP USING     │
          │       HOMOGRAPHY MATRIX            │
          │  CORRESPONDING TO ESTIMATED        │
          │   HEIGHT OF EACH PORTION, AND      │
          │  CALCULATE AVERAGE COORDINATES     │
          └────────────────┬───────────────────┘
                           │         ⌐S302
          ┌────────────────▼───────────────────┐
          │  CONVERT COORDINATES OF FEET OF    │
          │   PERSON OF CAMERA IMAGE INTO      │
          │    COORDINATES OF MAP USING        │
          │  HOMOGRAPHY MATRIX H₀ OF FEET,     │
          │ AND MAP CONVERTED COORDINATES      │
          └────────────────┬───────────────────┘
                           │
                           ▼
```

CONVERT COORDINATES OF FEET OF PERSON OF CAMERA IMAGE INTO COORDINATES OF MAP USING HOMOGRAPHY MATRIX $H_0$ OF FEET, AND MAP CONVERTED COORDINATES

S303 — IS DISTANCE BETWEEN AVERAGE COORDINATES AND FEET COORDINATES LESS THAN THRESHOLD r ?

NO → S305 — DETERMINE THAT FEET ARE HIDDEN

YES → S304 — DETERMINE THAT FEET ARE NOT HIDDEN

END

# FIG.18

COMPUTER 200

| CPU 201 | INPUT DEVICE 202 | DISPLAY 203 | COMMUNICA-TION DEVICE 204 | INTERFACE DEVICE 405 |

BUS 408

RAM 206

ACQUISITION PROCESS 206a

DETECTION PROCESS 206b

ESTIMATION PROCESS 206c

DETERMINATION PROCESS 206d

MAPPING PROCESS 206e

HARD DISK DEVICE 207

ACQUISITION PROGRAM 207a

DETECTION PROGRAM 207b

ESTIMATION PROGRAM 207c

DETERMINATION PROGRAM 207d

MAPPING PROGRAM 207e

EP 4 668 235 A1

# FIG.19

Europäisches
Patentamt
European
Patent Office
Office européen
des brevets

# EUROPEAN SEARCH REPORT

**Application Number**

EP 25 17 7223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARSIC DEJAN ET AL: "Applying multi layer homography for multi camera person tracking", DISTRIBUTED SMART CAMERAS, 2008. ICDSC 2008. SECOND ACM/IEEE INTERNATIONAL CONFERENCE ON, 1 September 2008 (2008-09-01), pages 1-10, XP093303898, Piscataway, NJ, USA DOI: 10.1109/ICDSC.2008.4635731 ISBN: 978-1-4244-2664-5 | 1-5,7-12 | INV. G06V20/52 |
| Y | * Sections 4-7; figures 3-9 * | 6 | |
| Y | JP 2022 121280 A (FUJITSU LTD) 19 August 2022 (2022-08-19) | 6 | |
| A | * paragraphs [0010], [0022], [0025] - [0031]; figures 4-6 * | 1-5,7-12 | |
| A | US 2021/019914 A1 (LIPCHIN ALEKSEY [US] ET AL) 21 January 2021 (2021-01-21) * paragraphs [0005], [0132]; figure 17 * | 1-12 | TECHNICAL FIELDS SEARCHED (IPC) |
| A | US 2023/113045 A1 (KOHATA SHUN [JP]) 13 April 2023 (2023-04-13) * paragraphs [0065], [0069] - [0071], [0104] - [0108]; figures 9,10 * | 1-12 | G06V |

The present search report has been drawn up for all claims

| Place of search | Date of completion of the search | Examiner |
|---|---|---|
| The Hague | 12 August 2025 | Meurisse, Wim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 7223

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2025

| Patent document cited in search report | | Publication date | Patent family member(s) | | Publication date |
|---|---|---|---|---|---|
| JP 2022121280 | A | 19-08-2022 | JP | 7615725 B2 | 17-01-2025 |
| | | | JP | 2022121280 A | 19-08-2022 |
| US 2021019914 | A1 | 21-01-2021 | NONE | | |
| US 2023113045 | A1 | 13-04-2023 | JP | 2023058391 A | 25-04-2023 |
| | | | US | 2023113045 A1 | 13-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021033395 A
- JP 2016177757 A
- WO 2020188746 A